# EUROPÄISCHE PATENTSCHRIFT

(11) **EP 2 420 025 B1**
(45) Veröffentlichungstag und Bekanntmachung des Hinweises auf die Patenterteilung: **09.01.2013**
(21) Anmeldenummer: 10718068.9
(22) Anmeldetag: 16.04.2010
(51) Int. Cl.: H04L 12/40, H04L 12/28

(54) **VERFAHREN UND KOMMUNIKATIONSSYSTEM ZUM ERMITTELN DES ZEITPUNKTES EINES EREIGNISSES IN EINEM IO-GERÄT**
METHOD AND COMMUNICATION SYSTEM FOR DETERMINING THE TIME OF AN EVENT IN AN IO DEVICE
PROCÉDÉ ET SYSTÈME DE COMMUNICATION POUR LA DÉTERMINATION DE L'INSTANT D'OCCURRENCE D'UN ÉVÉNEMENT DANS UN APPAREIL D'E/S

(30) Priorität: 16.04.2009 DE 102009017681
(43) Veröffentlichungstag der Anmeldung: 22.02.2012
(73) Patentinhaber: Phoenix Contact GmbH & Co. KG, 32825 Blomberg (DE)
(72) Erfinder: WESSLING, Klaus, 31675 Bückeburg (DE); KRUMSIEK, Dietmar, 31860 Emmerthal (DE); GEMKE, Christian, 33104 Paderborn (DE)
(74) Vertreter: Kampfenkel, Klaus
(86) Internationale Anmeldenummer: PCT/EP2010/002345
(87) Internationale Veröffentlichungsnummer: WO 2010/118879

(56) Entgegenhaltungen:
- US-A1- 2002 131 454
- US-A1- 2006 026 314
- ANONYMOUS: "IO-Link: Der neue Standard in der unteren Feldebene der führenden Automatisierungshersteller" INTERNET CITATION 1. Januar 2006 (2006-01-01), Seiten 1-14, XP002532270 Gefunden im Internet: URL:http://www.ifm.com/obj/IO-link_HMI06_P raesentation_ifm.pdf [gefunden am 2009-06-30]

## Beschreibung

Die Erfindung betrifft ein Kommunikationssystem sowie ein Verfahren zum Ermitteln des Zeitpunktes eines von einem ersten IO-Gerät erfassten Ereignisses in einem solchen Kommunikationssystem, welches eine überlagerte Steuereinrichtung mit einer Systemuhr und wenigstens eine mit der überlagerten Steuereinrichtung verbundene IO-Anbindungseinrichtung umfasst, an die jeweils ein erstes IO-Gerät anschließbar sind.

Bekannte Automatisierungssysteme umfassen in der Regel eine überlagerte Steuereinrichtung, beispielsweise in Form einer speicherprogrammierbaren Steuerung (kurz SPS genannt), die über ein Feldbussystem mit Eingabe-/Ausgabe-Geräten, auch IO-Geräte genannt, kommunizieren kann. Bei den IO-Geräten handelt es sich vorzugsweise um Sensoren und Aktoren. Um IO-Geräte in intelligenter Weise an ein Automatisierungssystem anbinden zu können, wird seit einiger Zeit ein besonderes Anbindungssystem, nämlich das IO-Link-Kommunikationssystem verwendet. Dieses standardisierte IO-Link-Kommunikationssystem enthält einen IO-Link-Master, an den in einer Sterntopologie mehrere IO-Link-Geräte, die im IO-Link Standard als IO-Link-Devices bezeichnet werden, angeschlossen sind. Das IO-Link-Kommunikationssystem wird demzufolge auch als ein Punkt-zu-Punkt-Kommunikationssystem bezeichnet. In einem solchen IO-Link-Kommunikationssystem können die IO-Link-Devices synchron, d. h. gleichzeitig, von dem IO-Link-Master angesprochen werden. Die Kommunikation zwischen dem IO-Link-Master und den daran angeschlossenen IO-Link-Devices erfolgt bevorzugt nur nach einer Aufforderung des IO-Link-Masters. Hierbei werden zyklische und azyklische Datenkommunikationen unterschieden. Prozessdaten werden in Datenrahmen zyklisch übertragen. Servicedaten werden auf Anfrage des IO-Link-Masters hin azyklisch von den IO-Link-Devices zum IO-Link-Master übertragen. Über den IO-Link-Master kommunizieren die IO-Link-Devicese schließlich mit der überlagerten Steuerung des Automatisierungssystems.

Um einen Prozessablauf fehlerfrei steuern und überwachen zu können, ist es erforderlich, dass die überlagerte Steuerung genau weiß, wann ein IO-Link-Sensor Messdaten erfasst bzw. ein IO-Link-Aktor eine Aktion ausführt.

Aus der US 2002/0131454 A1 ist ein synchronisiertes, getaktetes verteiltes Automatisierungssystem bekannt, bei dem Eingabe-/Ausgabe-Module über einen Feldbus mit einer überlagerten Steuereinrichtung verbunden sind. An die Eingabe-/Ausgabe-Module können IO-Geräte angeschlossen sein. Die Eingabe-/Ausgabe-Module werden mit einem Systemtakt synchronisiert. Aktuelle Werte können von einem IO-Gerät zu einem Eingabe-/Ausgabe-Modul übertragen werden, welches in einem taktgesteuerten Synchronismus die von dem IO-Gerät empfangenen aktuellen Werte gegebenenfalls mit einem Zeitstempel versieht und synchron zu Systemtakt an die überlagerte Steuereinrichtung überträgt.

Das erwähnte standardisierte IO-Link-Kommunikationssystem ist beispielsweise in der unbekannten Schrift "IO-Link: Der neue Standard in der unteren Feldebene der führenden Automatisierungshersteller" INTERNET CITATION 1. Januar 2006, Seiten 1 bis 14, XP002532270 beschrieben.

Der vorliegenden Erfindung liegt die Aufgabe zugrunde, ein Verfahren sowie ein Kommunikationssystem bereitzustellen, welche in kostengünstiger und einfacher Weise ermöglichen, dass die Zeitpunkte von Ereignissen, die in IO-Geräten erfasst worden sind, in einer überlagerten Steuereinrichtung ermittelt werden können.

Ein Kerngedanke der Erfindung ist darin zu sehen, dass IO-Geräte über ein IO-Anbindungssystem, vorzugsweise das standardisierte IO-Link-Kommunikationssystem, an eine überlagerte Steuereinrichtung angeschlossen werden. Hierzu werden mehrere IO-Geräte gemäß einer Sterntopologie an eine IO-Anbindungseinrichtung angeschlossen. Bei diesen IO-Geräten handelt es sich vorzugsweise um Sensoren und Aktoren. Weder die IO-Geräte noch die IO-Anbindungseinrichtung weisen eine lokale Uhr auf. Statt dessen wird als ein weiteres IO-Gerät eine Uhr an die IO-Anbindungseinrichtung angeschlossen, die mit einer Systemuhr der überlagerten Steuereinrichtung synchronisiert wird. Da die von der Uhr gelieferten Zeitdaten und die von den übrigen IO-Geräten erfassten Mess- oder Zustandsdaten gleichzeitig ausgelesen und zur IO-Anbindungseinrichtung übertragen werden, kann den von den IO-Geräten erfassten Messwerten oder Ereignissen ein präziser Zeitstempel zugeordnet werden.

Das oben genannte technische Problem wird zum Einen durch die Merkmale des Anspruchs 1 gelöst.

Danach umfasst ein Kommunikationssystem eine überlagerte Steuereinrichtung mit einer Systemuhr. Weiterhin umfasst das Kommunikationssystem wenigstens eine mit der überlagerten Steuereinrichtung verbundene IO-Anbindungseinrichtung, welche mehrere Anschlusseinrichtungen, auch Ports genannt, aufweist, an die jeweils ein erstes IO-Gerät anschließbar sind. Die ersten IO-Geräte sowie die IO-Anbindungseinrichtung enthalten keine lokale Uhr. An einer der Anschlusseinrichtungen der IO-Anbindungseinrichtung ist ein zweites IO-Gerät angeschlossen, welches eine Uhr enthält. Weiterhin ist eine Synchronisationseinrichtung vorgesehen, welche die an die IO-Anbindungseinrichtung angeschlossene Uhr mit der Systemuhr der überlagerten Steuereinrichtung synchronisiert. Die Übertragung von Zustandsdaten, welche von wenigstens einem der ersten IO-Geräte bereitgestellt werden, und die Übertragung der aktuellen Zeitdaten, welche das zweite IO-Gerät liefert, erfolgt gleichzeitig zur IO-Anbindungseinrichtung. Die IO-Anbindungseinrichtung ordnet den von dem wenigstens einen ersten IO-Gerät empfangenen Zustandsdaten die empfangenen aktuellen Zeitdaten zu und überträgt diese Daten dann zur überlagerten Steuereinrichtung.

Vorteilhafte Weiterbildungen sind Gegenstand der Unteransprüche.

Bei den ersten IO-Geräten handelt es sich vorzugsweise um Sensoren und/oder Aktoren, so dass die bereitgestellten Zustandsdaten vornehmlich Messereigneisse eines Sensors bzw. Aktionsereignisse eines Aktors darstellen. Ein Aktionsereignis kann ein Schaltereignis sein, wie zum Beispiel das Öffnen- oder Schließen eines Relais oder Ventils.

Die IO-Anbindungseinrichtung, die ersten IO-Geräte sowie das zweite IO-Gerät sind gemäß dem IO-Link-Standard ausgebildet. Ein derartiges IO-Link-Kommunikationssystem zeichnet sich dadurch aus, dass die IO-Geräte in einer Sterntopologie an die IO-Anbindungseinrichtung angeschlossen sind. Ausgelöst durch einen Anforderungsbefehl können die Daten der IO-Geräte synchron zur IO-Anbindungseinrichtung übertragen werden. Die von den ersten IO-Geräten bereitgestellten Daten und die vom zweiten IO-Gerät gelieferten Zeitdaten können hierbei azyklisch oder zyklisch übertragen werden.

Angemerkt sei jedoch, dass es sich bei der IO-Anbindungseinrichtung auch um irgendein anderes bekanntes oder noch zu entwickelndes Sensor/Aktor-Anbindungssystem handeln kann.

Damit der Zeitpunkt der in den ersten IO-Geräten erfassten Zustandsdaten, also erfassten Mess- und/oder Aktionsereignisse präzise ermittelt werden kann, wird in jedem ersten IO-Gerät ein zeitlicher Korrekturwert ermittelt und gegebenenfalls gespeichert. Der zeitliche Korrekturwert gibt den internen zeitlichen Versatz zwischen dem Erfassen von Zustandsaten und dem Übertragungszeitpunkt der Zustatzdaten während eines Übertragungszyklus in einem jeweiligen ersten IO-Gerät an. Der zeitliche Korrekturwert kann aus jedem ersten IO-Gerät als Parameter während eines Kommunikationszyklus ausgelesen werden.

Das oben genannte technische Problem wird zum Anderen durch die Verfahrensschritte des Anspruchs 4 gelöst.

Danach wird ein Verfahren zum Ermitteln des Zeitpunktes eines von einem ersten IO-Gerät erfassten Mess- oder Aktionsereignisses in einem Kommunikationssystem verfügbar gemacht. Die Mess- oder Aktionsereignisse werden durch Zustandsdaten dargestellt. Das Kommunikationssystem umfasst eine überlagerte Steuereinrichtung mit einer Systemuhr und wenigstens eine mit der überlagerten Steuereinrichtung verbundene IO-Anbindungseinrichtung, welche mehrere Anschlusseinrichtungen aufweist, an die jeweils ein erstes IO-Gerät anschließbar ist. Die ersten IO-Geräte sowie die IO-Anbindungseinrichtung besitzen jeweils keine lokale Uhr. Weiterhin ist an einer der Anschlusseinrichtungen ein zweites IO-Gerät angeschlossen, welches eine lokale Uhr enthält.

Um die Zeitpunkte der von wenigstens einem ersten IO-Gerät erfassten Ereignis ermitteln zu können, wird die an die IO-Anbindungseinrichtung angeschlossene Uhr mit der Systemuhr der überlagerten Steuereinrichtung synchronisiert.

Die Zustandsdaten, welche die von den ersten IO-Geräten erfassten Mess- und/oder Aktionsereignisse darstellen, werden gleichzeitig mit den von der Uhr gelieferten aktuellen Zeitdaten zur IO-Anbindungseinrichtung übertragen. In der IO-Anbindungseinrichtung werden die empfangenen Zustandsdaten des wenigstens einen ersten IO-Gerätes den empfangenen aktuellen Zeitdaten zugeordnet. Die zugeordneten Daten werden dann zur überlagerten Steuereinrichtung übertragen.

Eine Zuordnung der Zustandsdaten zu den Zeitdaten kann dadurch erreicht werden, dass sie im selben Übertragungsrahmen von der IO-Anbindungseinrichtung zur überlagerten Steuereinrichtung übertragen werden. Werden Zeitdaten und Daten in verschiedenen Rahmen übertragen, kann eine eindeutige Kennung verwendet werden, die die Zusammengehörigkeit von Daten und Zeitdaten bestätigt.

Vorteilhafte Weiterbildungen sind Gegenstand der Unteransprüche.

Um die in wenigstens einem ersten IO-Gerät erfassten Ereignisse zeitlich präzise bestimmen zu können, wird in jedem angeschlossenen ersten IO-Gerät ein zeitlicher Korrekturwert ermittelt und gespeichert. Der jeweilige Korrekturwert wird über die IO-Anbindungseinrichtung zur überlagerten Steuereinrichtung übertragen. Die empfangenen aktuellen Zeitdaten werden dann in der überlagerten Steuereinrichtung hinsichtlich jedes ersten IO-Gerätes in Abhängigkeit des entsprechenden zeitlichen Korrekturwertes korrigiert.

Die Synchronisation zwischen der Systemuhr und der an der IO-Anbindungseinrichtung angeschlossenen Uhr kann kontinuierlich oder zu einstellbaren Zeitpunkte ausgeführt werden. Hierbei können die Synchronisierungsdaten über die Kommunikationspfade, über die auch die Prozessdaten übertragen werden, geschickt werden. Alternativ oder zusätzlich kann ein separater Kommunikationspfad für die Synchronisierungsdaten, zum Beispiel über eine Bluetooth- oder Infrarotverbindung, zwischen der überlagerten Steuerung und der IO-Uhr aufgebaut werden.

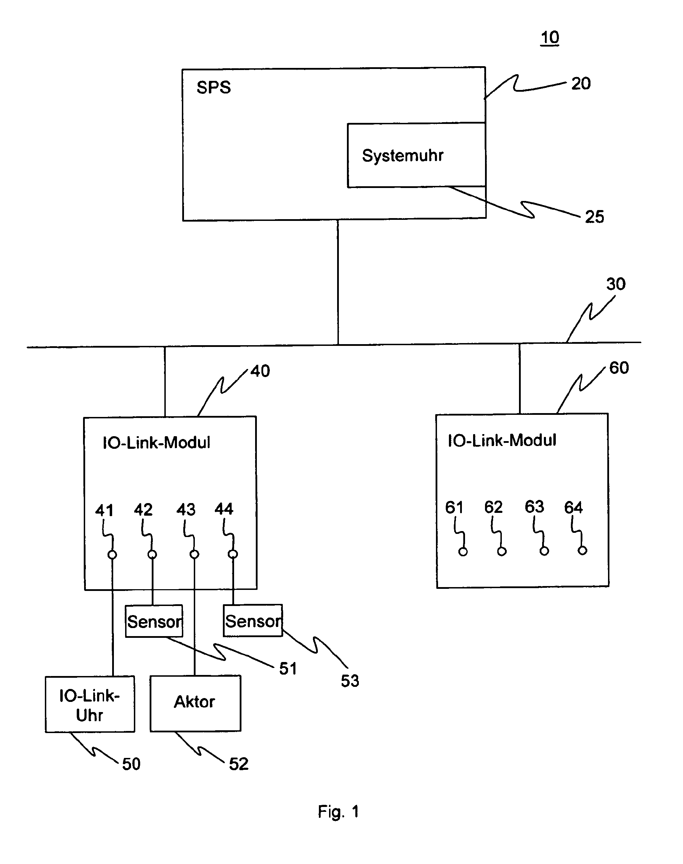

Die Erfindung wird nachfolgend anhand eines Ausführungsbeispiels in Verbindung mit einer einzigen Figur näher erläutert.

Die Figur zeigt als beispielhaftes Kommunikationssystem ein Automatisierungssystem 10, welches eine speicherprogrammierbare Steuerung (SPS) 20 enthält. Lediglich der einfachen Darstellung wegen ist in der SPS 20 nur eine Systemuhr 25 dargestellt. Die SPS 20 ist beispielsweise an einen Feldbus 30 angeschlossen. Aktoren und Sensoren sind über sogenannte IO-Link-Module an den Feldbus 30 angeschlossen und können mit der SPS 20 kommunizieren. Lediglich der einfachen Darstellung wegen sind nur zwei IO-Link-Module 40 und 60 an den Feldbus angeschlossen. Daten können zwischen der SPS 20 und den IO-Link-Modulen 40 und 60 gemäß dem standardisierten IO-Link-Kommunikationsprotokoll ausgetauscht werden. Hierzu werden verschiedene Telegrammtypen verwendet, um Prozessdaten, Servicedaten, Ereignisdaten und andere Daten als Eingangs- und Ausgangsdaten zu übertragen.

Die beiden dargestellten IO-Link-Module 40 und 60 weisen beispielsweise jeweils 4 Ports nämlich 41, 42, 43 und 44 beziehungsweise 61, 62, 63 und 64 auf, an die jeweils ein IO-Gerät angeschlossen werden kann. Im vorliegenden Beispiel sind nur am IO-Link-Modul 40 IO-Geräte angeschlossen. Im Einzelnen ist am Port 42 ein Sensor 51, am Port 43 ein Aktor 52 und am Port 44 wiederum ein Sensor 53 angeschlossen. Angemerkt sei, dass das IO-Link-Modul 40, die beiden Sensoren 51 und 53 sowie der Aktor 52 keine lokale Uhr besitzen. Am Port 41 des IO-Link-Moduls 40 ist ein weiteres IO-Gerät 50 angeschlossen, welches eine Uhr enthält. Die gemäß einer Sterntopologie an das IO-Link-Modul 40 angeschlossenen IO-Geräte 50, 51, 52 und 53 übertragen ihre jeweiligen Zeit-, Mess- oder Zustandsdaten gleichzeitig zum IO-Link-Modul 40.

In der SPS 20 kann eine Synchronisationseinrichtung (nicht dargestellt) implementiert sein, die unter Steuerung eines Synchronisierungsprotokoll dafür sorgt, dass die am IO-Link-Modul 40 angeschaltete IO-Link-Uhr 50 kontinuierlich oder zu vorbestimmten Zeitpunkten synchronisiert wird. Die Synchronisationsdaten können in zyklischen oder azyklischen Kommunikationszyklen als Steuerdaten über den Feldbus 30 zur IO-Link-Uhr 50 übertragen werden. Alternativ können die Synchronisationsdaten auch über eine separate drahtlose oder drahtgebundene Verbindung von der SPS 20 zur IO-Uhr 50 übertragen werden. Hierdurch kann der Datenverkehr über den Feldbus 30 entlastet werden. Die Synchronisation zwischen der Systemuhr 25 und der IO-Uhr 50 kann beispielsweise gemäß dem IEEE 1588 Standard ausgeführt werden. Das IO-Link-Modul 60 kann in ähnlicher Weise wie das IO-Link-Modul 40 beschaltet sein, so dass wiederum an einem der Ports ein eine lokale Uhr enthaltenes IO-Gerät angeschlossen sein kann.

Eine besondere Ausbildungsform sieht vor, dass die Sensoren 51 und 53 sowie der Aktor 52 gezielt, zum Beispiel einzeln oder gruppenweise, von der SPS 20 angesprochen werden können, um Daten über das IO-Link-Modul 40 zur SPS 20 zu übertragen. Unbeachtlich ist, welcher Sensor oder welcher Aktor Daten zum IO-Link-Modul 40 überträgt. Die aktuellen Zeitdaten der Uhr 50 werden immer synchron mit den entsprechend ausgelesenen Zustandsdaten der Sensoren oder des Aktors zum IO-Link-Modul 40 übertragen.

Die Funktionsweise des Kommunikationssystems 10 wird anhand eines Ausführungsbeispiels nunmehr detailliert erläutert.

Angenommen sei, dass die Zustandsdaten der Sensoren 51 und 53 und die Zeitdaten der IO-Uhr 50 zyklisch, zum Beispiel jede Sekunde, und gleichzeitig ausgelesen werden. Der letzte Auslesezyklus fand beispielsweise um 11:55:01 Uhr statt. Weiterhin sei angenommen, dass in den Sensoren 51 und 53 aktuelle Sensordaten vorliegen, während im Aktor 52 aktuelle Zustandsdaten über ein Aktionsereignis gespeichert sind. Die Zustandsdaten der Sensoren und des Aktors können binäre Zustände (0 oder 1), zum Beispiel das Über- oder Unterschreiten eines Schwellwertes bzw. das Schließen oder Öffnen eines Relais darstellen. Nunmehr sei angenommen, dass sich die Zustände in den Sensoren 51 und 53 und im Aktor 52 seit dem letzten Auslesezyklus jeweils von 0 auf 1 geändert haben. Die aktuellen Zustandsdaten des Aktors 52 sowie der Sensoren 51 und 53 werden nach einer erneuten Aufforderung vom IO-Link-Modul 40 gleichzeitig mit den aktuellen Zeitdaten der Uhr 50 ausgelesen und zum IO-Link-Modul 40 übertragen. Die aktuelle Uhrzeit der IO-Uhr 50 beträgt zum Auslesezeitpunkt 11:55:02 Uhr. Diese Kommunikationsart ist dem Fachmann aus dem IO-Link-Standard bekannt. Die Zustandsdaten des Aktors 52 sowie der Sensoren 51 und 53 werden den von der Uhr 50 gelieferten aktuellen Zeitdaten zugeordnet, in dem sie beispielsweise in einen gemeinsamen Datenrahmen eingepackt und anschließend vom IO-Link-Modul 40 zur SPS 20 übertragen werden. Auf diese Weise wird den Zustandsdaten, welche von den Sensoren 51 und 53 und dem Aktor 52 erfasst worden sind, ein präziser Zeitstempel aufgeprägt. Der Zeitstempel ermöglicht der SPS 20, den präzisen Zeitpunkt der Mess- bzw. Aktionsereignisse zu ermitteln, obgleich weder das IO-Link-Modul 40 noch die Sensoren 51 und 53 und der Aktor 52 über eine lokale Uhr verfügen. Da der SPS 20 die Zustandsdaten, nämlich jeweils eine logische Null, der Sensoren 51 und 53 sowie des Aktors 52 des letzten Auslesezyklus bekannt sind, kann sie den Zeitpunkt der aktuellen Zustandsänderungen ermitteln. Denn mit dem aktuellen Auslesezyklus wurde der SPS 20 mitgeteilt, dass die Zustandsdaten der Sensoren 51 und 53 sowie des Aktors 52 von Null auf Eins gewechselt haben, und zwar zum Zeitpunkt 11:55:02 Uhr. Demzufolge ist der SPS 20 bekannt, dass zwischen 11:55:01 Uhr und 11:55:02 Uhr jeweils ein Zustandswechsel in den Sensoren 51 und 53 und dem Aktor 52 stattgefunden hat. Somit kann die SPS 20 mit einer zeitlichen Genauigkeit, welche dem zeitlichen Abstand zwei aufeinanderfolgender Auslesezyklen entspricht, den Erfassungszeitpunkt von Zustandsdaten bzw. den Zeitpunkt ermitteln, zu dem sich Zustandsdaten ändern.

Um den Erfassungs- oder Änderungszeitpunkt präziser ermitteln zu können, können die Sensoren 51 und 53 sowie der Aktor 52 jeweils einen Zähler (nicht dargestellt) aufweisen, der die Zeit zwischen zwei Auslesezyklen misst. Sobald Zustandsdaten erfasst oder eine Zustandsänderung ermittelt worden ist, kann der Zähler angehalten werden. Der Zählstand des Zählers entspricht einem zeitlichen Korrekturwert oder internen Zeitoffset, der einen Zeitversatz bezogen auf den IO-Link-Auslesezyklus wiedergibt. Beispielsweise entspricht der Zählwert einem Zeitintervall von 20ms, was besagt, dass ein Zustandswechsel 20ms nach dem letzten Auslesezyklus, der um 11:55:01 Uhr erfolgte, aufgetreten ist. Die in den Sensoren und dem Aktor jeweils gespeicherten internen Zeitoffsets können als Parameter in einem Kommunikationszyklus aus den Sensoren und dem Aktor ausgelesen und über das IO-Link-Modul der SPS 20 zugeführt werden. Unter Ansprechen auf den jeweiligen Zeitversatz kann die SPS 20 die von der IO-Link-Uhr 50 empfangenen aktuellen Zeitdaten einzeln für jedes IO-Gerät korrigieren.

## Patentansprüche

1. Kommunikationssystem (10) umfassend
eine überlagerte Steuereinrichtung (20) mit einer Systemuhr (25),
wenigstens eine mit der überlagerten Steuereinrichtung (20) verbundene IO-Anbindungseinrichtung (40), welche mehrere Anschlusseinrichtungen (41-44) aufweist, an die jeweils ein erstes IO-Gerät (51-53) anschließbar sind, wobei die IO-Anbindungseinrichtung (40) und die ersten IO-Geräte (51-53) jeweils keine lokale Uhr besitzen,
**dadurch gekennzeichnet, dass**
an eine der Anschlusseinrichtungen (41) der IO-Anbindungseinrichtung (40) ein zweites IO-Gerät (50) angeschlossen ist, welches eine Uhr enthält, dass eine Synchronisationseinrichtung vorgesehen ist, welche die Uhr des zweiten IO-Geräts (50) mit der Systemuhr (25) der überlagerten Steuereinrichtung (20) synchronisiert, und dass
die Übertragung von Zustandsdaten, welche von wenigstens einem der ersten IO-Geräte (51-53) bereitgestellt werden, und die Übertragung der aktuellen Zeitdaten, welche das zweite IO-Gerät (50) liefert, zur IO-Anbindungseinrichtung (40) gleichzeitig erfolgt, und dass die IO-Anbindungseinrichtung (40) die von dem wenigstens einen ersten IO-Gerät (51-53) empfangenen Zustandsdaten den empfangenen aktuellen Zeitdaten zuordnet und diese Daten zur überlagerten Steuereinrichtung (20) überträgt.

2. Kommunikationssystem nach Anspruch 1,
**dadurch gekennzeichnet, dass**
die IO-Anbindungseinrichtung (40) und die IO-Geräte (50-53) gemäß dem IO-Link-Standard ausgebildet sind und dass
die Übertragung der von den ersten IO-Geräten (51-53) bereitgestellten Zustandsdaten und die Übertragung von dem zweiten IO-Gerät (50) gelieferten Zeitdaten azyklisch oder zyklisch erfolgt.

3. Kommunikationssystem nach Anspruch 1 oder 2,
**dadurch gekennzeichnet, dass**
jedes erste IO-Gerät (51-53) eine Einrichtung zum Ermitteln eines zeitlichen Korrekturfaktors aufweist, der in einem Speicher gespeichert werden kann, und dass
die überlagerte Steuereinrichtung (20) die empfangenen Zeitdaten entsprechend den zeitlichen Korrekturdaten hinsichtlich des jeweiligen ersten IO-Geräts (51-53) korrigieren kann.

4. Verfahren zum Ermitteln des Zeitpunktes eines von einem ersten IO-Gerät (51-53) erfassten Ereignisses in einem Kommunikationssystem (10), welches eine überlagerte Steuereinrichtung (20) mit einer Systemuhr (25) und wenigstens eine mit der überlagerten Steuereinrichtung (20 verbundene IO-Anbindungseinrichtung (40) umfasst, welche mehrere Anschlusseinrichtungen (41-44) aufweist, an die jeweils ein erstes IO-Gerät (51-53) anschließbar sind, wobei die ersten IO-Geräte (51-53) und die IO-Anbindungseinrichtung (40) jeweils keine lokale Uhr besitzen, und wobei an eine der Anschlusseinrichtungen (41) ein zweites IO-Gerät (50) angeschlossen ist, welches eine Uhr enthält, mit folgenden Schritten:
Synchronisieren der an die IO-Anbindungseinrichtung (40) angeschlossenen Uhr mit der Systemuhr (25);
gleichzeitiges Übertragen von Zustandsdaten, welche ein erfasstes Ereignis darstellen und von wenigstens einem ersten IO-Gerät (51-53) bereitgestellt werden, und den von der Uhr des zweiten IO-Geräts (50) gelieferten aktuellen Zeitdaten zur IO-Anbindungseinrichtung (40);
Zuordnen, in der IO-Anbindungseinrichtung (40), der empfangenen Zustandsdaten des wenigstens einen ersten IO-Geräts (51-53) zu den empfangenen aktuellen Zeitdaten;
Übertragen der Zustandsdaten des wenigstens einen ersten IO-Geräts (51-53) und der aktuellen Zeitdaten von der IO-Anbindungseinrichtung (40) zur überlagerten Steuereinrichtung (20).

5. Verfahren nach Anspruch 4,
**dadurch gekennzeichnet, dass**
in jedem angeschlossenen ersten IO-Gerät (51-53) ein zeitlicher Korrekturwert ermittelt wird, dass der jeweilige Korrekturwert zur überlagerten Steuereinrichtung (20) übertragen wird und dass die empfangenen aktuellen Zeitdaten in der überlagerten Steuereinrichtung (20) hinsichtlich jedes ersten IO-Geräts (51-53) in Abhängigkeit des entsprechenden zeitlichen Korrekturwerts korrigiert werden.

6. Verfahren nach Anspruch 4 oder 5,
**dadurch gekennzeichnet, dass** die IO-Anbindungseinrichtung und die IO-Geräte gemäß dem IO-Link-Standard ausgebildet sind und dass die Zeitdaten aus der Uhr und die Zustandsdaten aus den angeschlossenen ersten IO-Geräten gleichzeitig ausgelesen und zur IO-Anbindungseinrichtung übertragen werden.

## Claims

1. Communication system (10) comprising
a higher-level controller (20) having a system clock (25),
at least one IO link device (40) connected to the higher-level controller (20), which IO link device has a plurality of connecting devices (41-44) to which a respective first IO unit (51-53) can be connected, wherein neither the IO link device (40) nor the first IO units (51-53) has a local clock;
**characterised in that**
a second IO unit (50) is connected to one of the connecting devices (41) of the IO link device (40), which second IO unit contains a clock, that a synchronization device is provided which synchronizes the clock of the second IO unit (50) with the system clock (25) of the higher-level controller (20), and that
the transmission of status data, which are provided by at least one of the first IO units (51-53), and the transmission of the current time data, supplied by the second IO unit (50), to the IO link device (40) take place simultaneously, and that the IO link device (40) assigns the status data received from the at least one first IO unit (51-53) to the received current time data and transmits these data to the higher-level controller (20).

2. Communication system as claimed in claim 1, **characterised in that** the IO link device (40) and the 10 units (50-53) are designed according to the IO link standard, and
that the transmission of the status data provided by the first IO units (51-53) and the transmission of time data supplied by the second IO unit (50) take place acyclically or cyclically.

3. Communication system as claimed in claim 1 or 2, **characterised in that** each first IO unit (51-53) has a device to determine a time correction factor which can be stored in a memory, and that the higher-level controller (20) can correct the received time data according to time correction data with respect to the respective first IO unit (51-53).

4. Method for determining the time of an event detected by a first IO unit (51-53) in a communication system (10) which comprises a higher-level controller (20) having a system clock (25) and at least one IO link device (40) connected to the higher-level controller (20), which IO link device has a plurality of connecting devices (41-44) to which a respective first IO unit (51-53) can be connected, wherein neither the first IO units (51-53) nor the IO link device (40) has a local clock, and wherein a second IO unit (50) is connected to one of the connecting devices (41), which second IO unit contains a clock, having the following steps:
synchronizing the clock connected to the IO link device (40) with the system clock (25);
simultaneously transmitting status data which represent a detected event and are provided by at least one first IO unit (51-53), and the current time data supplied by the clock of the second IO unit (50) to the IO link device (40);
assigning, in the IO link device (40), the received status data of the at least one first IO unit (51-53) to the received current time data;
transmitting the status data of the at least one first IO unit (51-53) and the current time data from the IO link device (40) to the higher-level controller (20).

5. Method as claimed in claim 4, **characterised in that** in each connected first IO unit (51-53) a time correction value is determined, that the respective correction value is transmitted to the higher-level controller (20) and that the received current time data are corrected in the higher-level controller (20) with respect to each first 10 unit (51-53) in dependence upon the corresponding time correction value.

6. Method as claimed in claim 4 or 5, **characterised in that** the IO link device and the IO units are designed according to the IO link standard and that the time data are read out from the clock and the status data are read out from connected first IO units simultaneously and transmitted to the IO link device.

## Revendications

1. Système de communication (10) comprenant un dispositif de commande (20) hiérarchiquement supérieur avec une horloge système (25),
au moins un dispositif de liaison IO (40) relié au dispositif de commande (20) hiérarchiquement supérieur, lequel comprend plusieurs dispositifs de connexion (41-44) à chacun desquels peut être raccordé un premier appareil IO (51-53), le dispositif de liaison IO (40) et les premiers appareils IO (51-53) n'étant respectivement dotés d'aucune horloge locale,
**caractérisé en ce qu'**un deuxième appareil IO (50) est raccordé à un des dispositifs de connexion (41) du dispositif de liaison IO (40), lequel contient une horloge, **en ce qu'**un dispositif de synchronisation est prévu, lequel synchronise l'horloge du deuxième appareil IO (50) avec l'horloge système (25) du dispositif de commande (20) hiérarchiquement supérieur, et
**en ce que** la transmission au dispositif de liaison IO (40) de données d'état délivrées par au moins un des premiers appareils IO (51-53), et la transmission des données temporelles actuelles délivrées par le deuxième appareil IO (50), sont effectuées simultanément, et **en ce que** le dispositif de liaison IO (40) associe les données d'état reçues par le ou les premiers appareils IO (51-53) aux données temporelles actuelles reçues, et transmet lesdites données au dispositif de commande (20) hiérarchiquement supérieur.

2. Système de communication selon la revendication 1,
**caractérisé en ce que** le dispositif de liaison IO (40) et les appareils IO (50-53) sont réalisés conformément au standard IO-Link, et
**en ce que** la transmission des données d'état délivrées par les premiers appareils IO (51-53) et la transmission des données temporelles délivrées par le deuxième appareil IO (50) sont effectuées cycliquement ou acycliquement.

3. Système de communication selon la revendication 1 ou 2,
**caractérisé en ce que** chaque premier appareil IO (51-53) comprend un dispositif permettant de déterminer un facteur de correction temporelle susceptible d'être sauvegardé dans une mémoire, et
**en ce que** le dispositif de commande (20) hiérarchiquement supérieur peut corriger les données temporelles reçues en fonction des données de correction temporelle pour chaque premier appareil IO (51-53).

4. Procédé de détermination du moment d'un événement détecté par un premier appareil IO (51-53) dans un système de communication (10) comprenant un dispositif de commande (20) hiérarchiquement supérieur avec une horloge système (25) et au moins un dispositif de liaison IO (40) relié au dispositif de commande (20) hiérarchiquement supérieur, lequel comprend plusieurs dispositifs de connexion (41-44) à chacun desquels peut être raccordé un premier appareil IO (51-53), les premiers appareils IO (51-53) et le dispositif de liaison IO (40) n'étant respectivement dotés d'aucune horloge locale, et un deuxième appareil IO (50) étant raccordé à un des dispositifs de connexion (41), lequel contient une horloge, comportant les étapes suivantes :
synchronisation de l'horloge reliée au dispositif de liaison IO (40) avec l'horloge système (25) ;
transmission simultanée au dispositif de liaison IO (40) de données d'état représentant un événement détecté et délivrées par au moins un premier appareil IO (51-53), et des données temporelles actuelles délivrées par l'horloge du deuxième appareil IO (50) ;
association, dans le dispositif de liaison IO (40), des données d'état reçues du au moins un premier appareil IO (51-53) aux données temporelles actuelles reçues ;
transmission des données d'état du au moins un premier appareil IO (51-53) et des données temporelles actuelles du dispositif de liaison IO (40) au dispositif de commande (20) hiérarchiquement supérieur.

5. Procédé selon la revendication 4,
**caractérisé en ce qu'**une valeur de correction temporelle est déterminée dans chaque premier appareil IO (51-53) raccordé,
**en ce que** chaque valeur de correction est transmise au dispositif de commande (20) hiérarchiquement supérieur, et
**en ce que** les données temporelles actuelles reçues sont corrigées dans le dispositif de commande (20) hiérarchiquement supérieur pour chaque premier appareil IO (51-53) en fonction de la valeur de correction temporelle correspondante.

6. Procédé selon la revendication 4 ou 5, **caractérisé en ce que** le dispositif de liaison IO et les appareils IO sont réalisés conformément au standard IO-Link, et **en ce que** les données temporelles de l'horloge et les données d'état des premiers appareils IO raccordés sont extraites et transmises simultanément au dispositif de liaison IO.
